# EUROPEAN PATENT SPECIFICATION

(11) **EP 1 416 484 B1**
(45) Date of publication and mention of the grant of the patent: **26.12.2007**
(21) Application number: 03024519.5
(22) Date of filing: 27.10.2003
(51) Int. Cl.: G11B 17/04

(54) **Disc insertion preventive device**
Vorrichtung zum Verhindern des Einführens von Platten
Dispositif pous éviter l'introduction de disques

(30) Priority: 28.10.2002 JP 2002312478
(43) Date of publication of application: 06.05.2004
(73) Proprietor: ORION ELECTRIC CO., Ltd., Takefu-shi, Fukui 915-8555 (JP)
(72) Inventor: Azai, Kouji, Takefu-shi Fukui 915-8555 (JP)
(74) Representative: Vossius & Partner

(56) References cited:
- US-A- 4 507 768
- PATENT ABSTRACTS OF JAPAN vol. 2002, no. 03, 3 April 2002 (2002-04-03) -& JP 2001 331999 A (ALPINE ELECTRONICS INC), 30 November 2001 (2001-11-30)
- PATENT ABSTRACTS OF JAPAN vol. 0070, no. 32 (P-174), 8 February 1983 (1983-02-08) -& JP 57 183665 A (TOKYO SHIBAURA DENKI KK), 12 November 1982 (1982-11-12)

## Description

The present invention relates to a disc insertion preventive device which assures that when a disc apparatus is already loaded with a disc, another disc is prevented from being inserted into the apparatus

The disc apparatus records or reproduces information such as sound and pictures that stored in a disc, which is put on its turning table. There are various loading methods. For one example use is made of a reciprocating tray which carries a disc from the disc slot to the turning table or vice versa. For another example use is made of a pull-in mechanism which is responsive to insertion of a disc from the disc slot for gripping and pulling the disc toward the turning table in the housing.

A disc insertion preventive device according to the present invention is appropriate for use in the latter loading type. The user often tries to push a disc into the disc apparatus without making sure that it is not loaded with a disc. Then, the new disc hits the loaded disc so that they may be harmed or spoiled together. With a view to prevent such an incident some disc apparatuses are equipped with insertion preventive means.

JP2001-331999(A), titled "Disc Device" shows a disc apparatus equipped with disc insertion preventive means, wherein it is allowed the sure closing of an inserting and discharging member by an accidental insertion preventive member by making a movable range of the accidental insertion preventive member larger with respect to a descending distance of a movable base. The apparatus comprises a stopper with a front blocking piece and which is pivotally fixed to the housing and a swinging means adapted to pivot the stopper in order to close the disc insertion opening. This proposed structure is complicated and accordingly the manufacturing cost is high.

JP2002-150652(A), titled "Slot-In Type Optical Disc Reproducing Device" uses various sensors to detect and reject any undesired disc even if it is inadvertently inserted in the disc apparatus. The insertion preventive mechanism cannot work even if only a single sensor does not function well, and the optical detecting-and-rejecting unit is less reliable than the mechanical one.

In view of the above one object of the present invention is to provide a disc insertion preventive device which is simple in structure, still assuring that when a disc apparatus is already loaded with a disc, another disc is prevented from being inserted into the device, no matter what size or shape the subsequent disc may have.

The object of the invention is achieved with the features of the claims.

To attain this object a disc insertion preventive device according to the present invention comprises: a housing having a disc slot made on its front side; a stopper having a flat plate and front and rear blocking pieces dependent from the opposite lateral edges of the flat plate, the stopper being pivotally fixed to the housing with the front blocking piece directed toward the disc slot of the housing; and swinging means responsive to the absence of a disc in the housing for inclining the stopper with the rear blocking piece down and with the front blocking piece up, thus preventing advance of a disc smaller than a predetermined size disc beyond the descendent rear blocking piece; responsive to insertion of a regular-size disc for keeping the stopper horizontal, thereby permitting advance of the regular-size disc to the final loading position in the housing, and responsive to the presence of a disc in the housing for inclining the stopper with the rear blocking piece up and with the front blocking piece down, thereby preventing insertion of another disc from the disc slot.

The flat plate of the stopper may have first and second lateral narrow extensions from its opposite sides, and a leg extension extending downward from lateral side end of the first lateral narrow extension, the first lateral narrow extension having a slope formed on its upper surface. The swinging means may comprise: a first rotary lever having first and second arms, the first rotary lever being placed next to one end of the disc slot, and being spring-biased toward the stand-by position in which: the first arm is located to be hit and pushed by a disc when inserted in the disc slot; and the second arm is applied to the slope of the first lateral narrow extension of the flat plate of the stopper whereby the stopper may balance on the leg extension in response to insertion of the disc from the disc slot, allowing advance of the disc to the final loading position; a second rotary lever one end of which is rotatably fixed to the housing; forward and rearward rolls both ganged and movably fixed to the housing, and operatively connected to the second rotary lever, the rearward roll having latch means to keep the stopper inclined with the rear blocking piece down and with the front blocking piece up; the forward roll being placed so close to the other end of the disc slot as to be hit and pushed by a disc when inserted in the disc slot, whereby the ganged rolls are shifted laterally to allow the rearward roll to release the stopper, and at the same time rotate the second rotary lever until it catch the other engagement projection of the second lateral narrow extension of the flat plate of the stopper, thus keeping the stopper standing on the leg extension; and a slider movably fixed to the housing, the slider having a cam abutting the leg extension of the stopper, the slider being movable in unison of the advance of the disc in the housing while allowing the leg extension to follow the cam contour, thus tilting the stopper when the disc reaches the final loading position so that the rear blocking piece rises up and that the front blocking piece descends down, thus preventing insertion of another disc from the disc slot.

The first rotary lever further may have a third arm to abut and hold the flat plate of the stopper when the second arm makes the stopper balance on the leg extension, thus preventing further rotation of the second arm.

Other objects and advantages of the present invention will be understood from the following description of a disc insertion preventive device according to one preferred embodiment of the present invention, which is shown in accompanying drawings.
Figs.1 (A), 1 (B) and 1 (C) show how the stopper change its postures while a disc is inserted from the disc slot until it reaches the final loading position in the housing;
Fig.2 is a plan view of the disc insertion preventive device, showing how its parts are operatively connected together before the disc is inserted in the housing;
. Fig.3 is a perspective view of the first lever and the first lateral narrow extension of the stopper, showing how they are operatively connected before the disc is inserted in the housing;
Fig.4 is a similar perspective view, but showing how the first lever works on the first lateral narrow extension of the stopper when the disc is inserted to hit and rotate the first lever;
Fig.5 is a plan view of the disc insertion preventive device, showing how its parts are operatively connected together when the disc is partly inserted into the housing;
Fig.6 is a plan view of the ganged rolls, which are responsive to insertion of the disc for moving and giving way to the advancing disc (broken lines);
Fig.7 is a plan view of the disc insertion preventive device, showing how its parts are operatively connected together when approximately two thirds of the disc is pushed in the housing; and
Fig.8 is a plan view of the disc insertion preventive device, showing how its parts are operatively connected together when the disc is loaded.

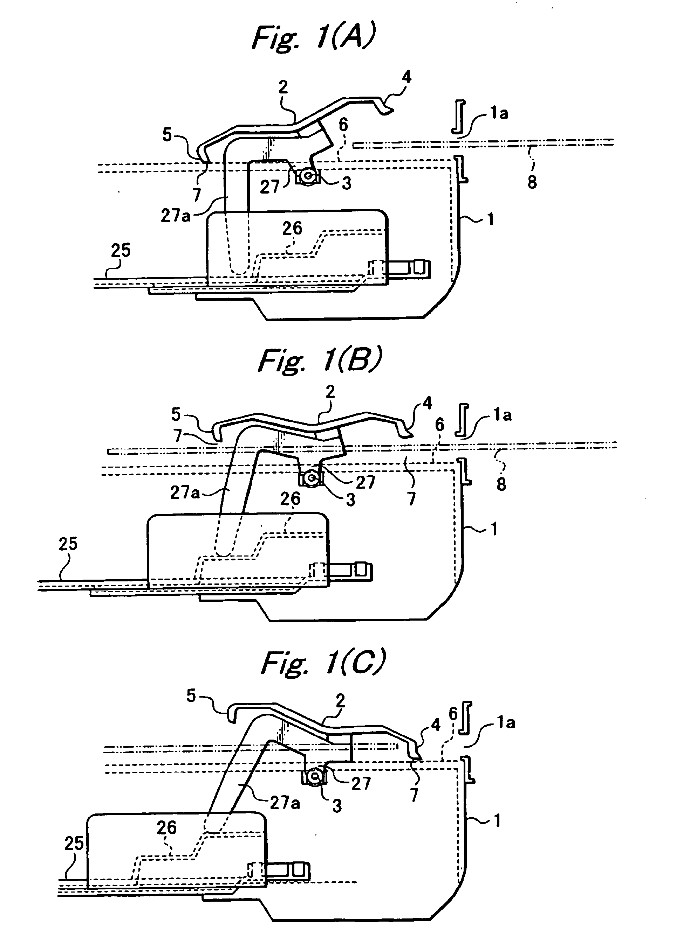

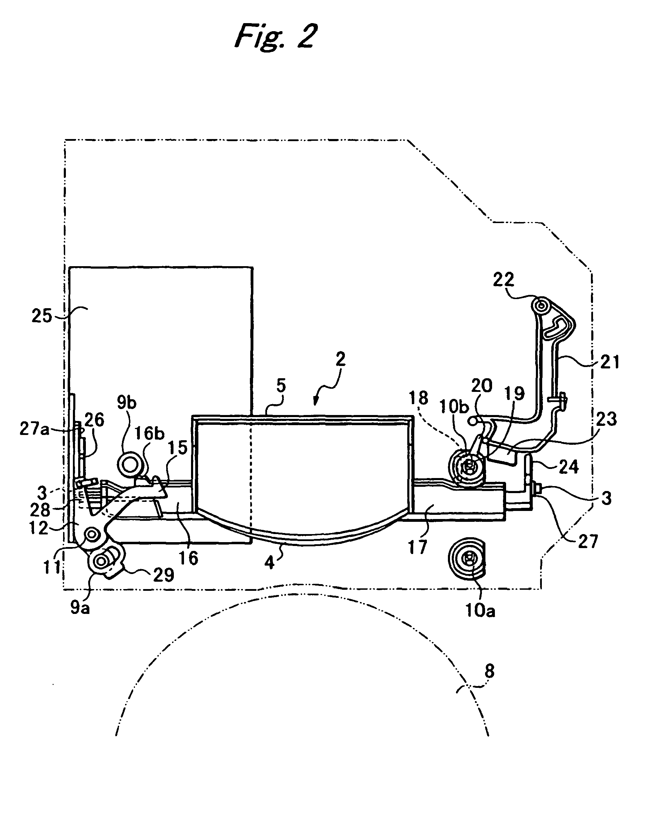

Referring to Figs.1 and 2, a disc insertion preventive device comprises a housing 1 having a disc slot 1 a made on its front side; a stopper 2 and means for swinging the stopper 2 (later described). The stopper 2 comprises a flat plate having linear and convex edges having two lateral narrow extensions 16 and 17, and front and rear blocking pieces 4 and 5 dependent from the linear and convex edges of the flat plate. The first lateral narrow extension 16 has a slope 16a rising higher toward the disc slot 1 a whereas the second lateral narrow extension 17 has engagement projections 18 and 24 directed rearward. The stopper 2 is fixed to the housing 1 to rotate about its pivots 3, 3 via short legs 27, 27 extended from the both lateral side ends of the first and second narrow extensions 16 and 17, the front blocking piece 4 being directed toward the disc slot 1 a of the housing 1. The short leg 27 of the first lateral narrow extension 16 has a leg extension 27a extending downward (see Figs.1(A) to 1(C)). The way 7 running from the disc slot 1 a to the final loading position is defined between the intermediate flat surface 6 and the swingable stopper 2.

The swinging means is responsive to the absence of a disc in the housing 1 for inclining the stopper 2 with the rear blocking piece 5 down and with the front blocking piece 4 up, thus permitting insertion of a disc 8 from the disc slot 1 a, but preventing advance of the disc 8 beyond the descendent rear blocking piece 5 by blocking the way 7 to the final loading position (see Fig.1(A)). The swinging means is responsive to the partial insertion of the disc 8 in the housing 1 for making the stopper 2 balance on its leg extension 27a, not blocking the way 7 running from the disc slot 1 a to the final loading position (see Fig.1 (B)). Also, the swinging means is responsive to the presence of a disc in the housing 1 for inclining the stopper 2 with the rear blocking piece 5 up and with the front blocking piece 4 down, thus preventing insertion of another disc 8 from the disc slot (see Fig.1 (C)).

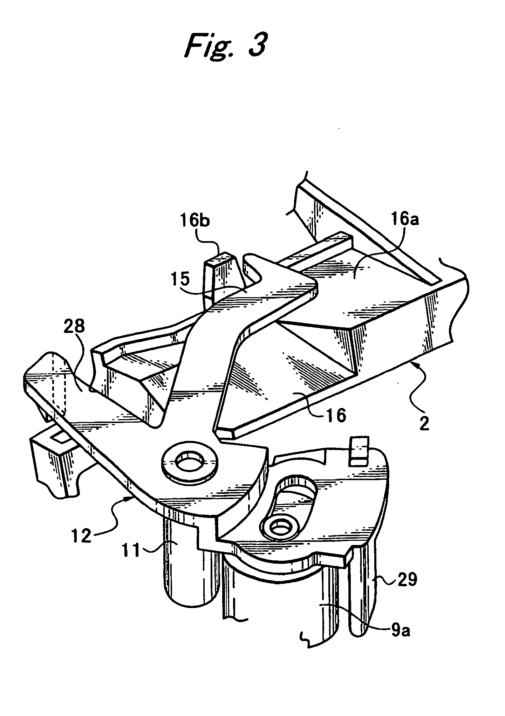

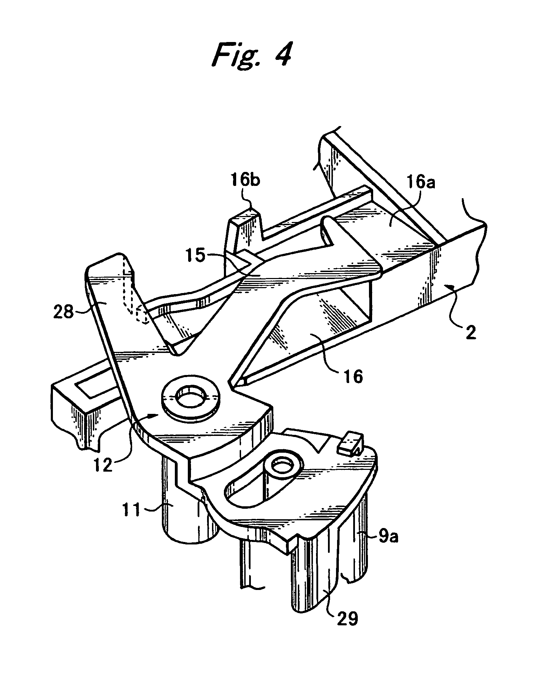

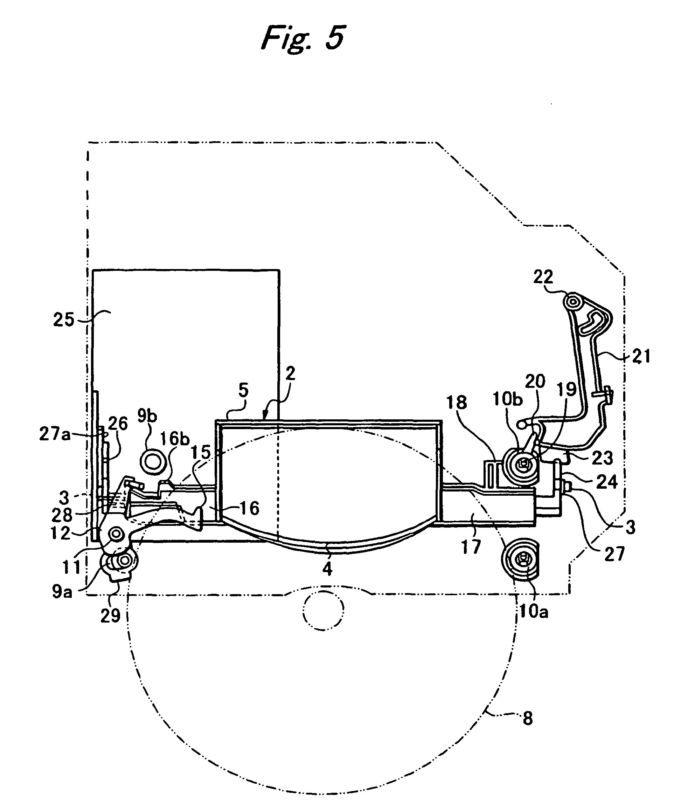

Referring to Figs. 2 to 7, the swinging means comprises a first rotary lever 12, a second rotary lever 21, forward and rearward rolls 10a and 10b, and a slider 25 (see Fig.1). The first rotary lever 12 has first, second and third arms 29, 15 and 28. It is placed next to one end of the disc slot 1 a (the left end of the disc slot in Fig.2), and is spring-biased toward the stand-by position (see Fig.1 (A)) in which: the first arm 29 is located to be hit and pushed by a disc 8 when inserted in the disc slot 1 a; and the second arm 15 is applied to the slope 16a of the first lateral narrow extension 16 of the flat plate of the stopper 2 (see Figs.2 and 3). The second arm 15 is pushed to a hook 16b projected from the rear side edge of the first lateral narrow extension 16 in the stand-by position. When the disc 8 is inserted from the disc slot 1 a, it hits and pushes the first arm 29. Then, the first arm 29 is yieldingly rotated clockwise, making the second arm 15 push the slope 16a (see Figs.4 and 5) until the second arm 15 makes the stopper 2 balance on the leg extension 27a. The third arm 28 abuts and holds the first lateral narrow extension 16 of the flat plate of the stopper 2, thus preventing further rotation of the second arm 15 (see Fig.4). In this position two thirds of the disc 8 is inserted into the housing 1. The stopper 2 unblocks the way 7 to the final loading position (see Fig.1 (B)). Thus, advance of the disc 8 to the final loading position is permitted.

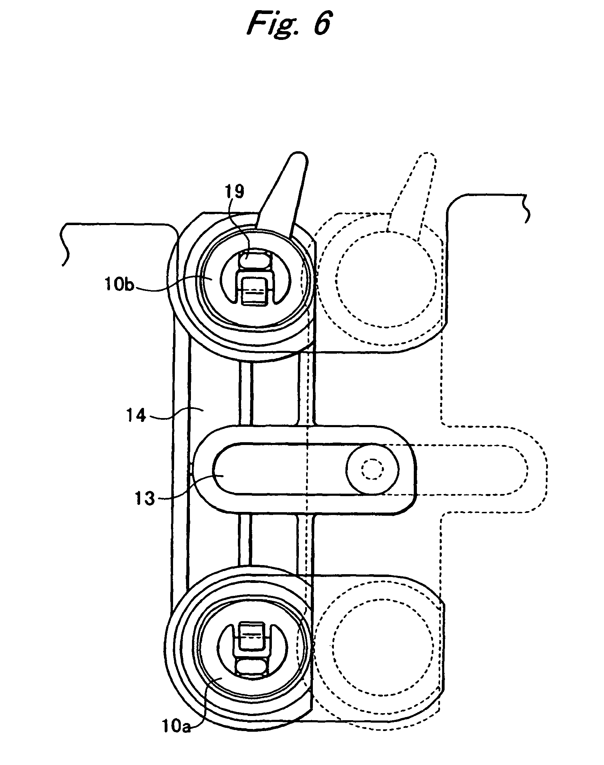

The forward and rearward rolls 10a and 10b are ganged and movably fixed to the housing 1 (see Fig.6). The ganged rolls 10a and 10b confront the first rotary lever 12. The second rotary lever 21 looks like a fishhook. It has a pivot 22 on one end and a curved recess formed on the other end. Also, it has a small flat projection 23 formed next to the curved recess. The second rotary lever 21 is rotatably fixed to the housing 1, and is operatively connected to the rearward roll 10b of the ganged rolls 10a and 10b. The rearward roll 10b has a rearward finger 20 and latch means 19 formed on its top. In the stand-by position (Fig.1 (A)) the rearward finger 20 extends close to the curved recess of the second rotary lever 21 (see Fig.2). The latch means 19 catches the engagement projection 18 of the second lateral extension of the stopper 2, thus keeping the stopper 2 inclined with the rear blocking piece 5 down and with the front blocking piece 4 up.

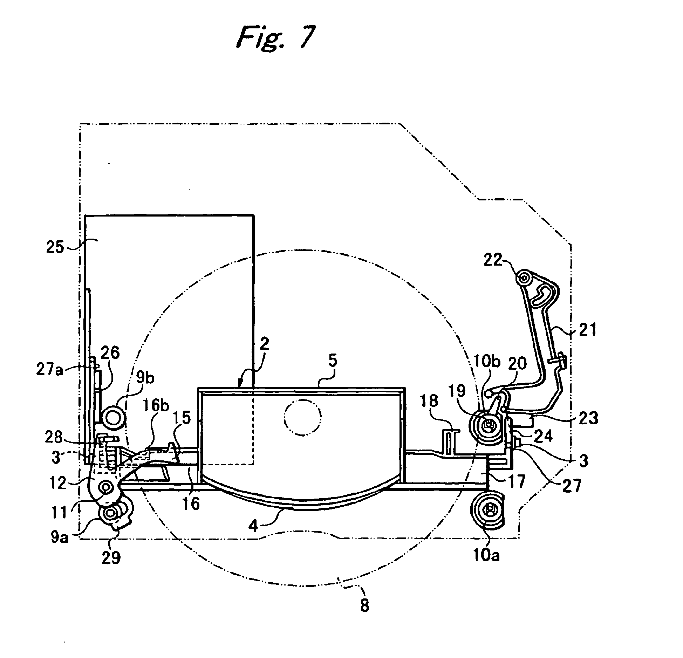

The forward roll 10a is placed so close to the other end of the disc slot 1 a (the right end of the disc slot in Fg.2) as to be hit and pushed by a disc 8 when it is inserted in the disc slot 1a, thus making the ganged rolls 10a and 10b move sideways to allow the rearward roll 10b to release engagement projection 18 of the second lateral extension of the stopper 2. At the same time, the second rotary lever 21 is made to turn until the small flat projection 23 crawls under the engagement projection 24 of the second lateral extension of the stopper 2, thus keeping the stopper 2 balancing on the leg extension 27a (see Figs.1(B) and 7).

When insertion of the disc 8 is detected by a sensor (not shown), first and second drive rolls 9a and 9b start rotating to pull the disc 8 into the housing 1. Then, the disc 8 is pinched between the first and second drive rolls 9a and 9b and the ganged rolls 10a and 10b, and the disc 8 is carried to the final loading position where the turntable is ready to fit the disc 8.

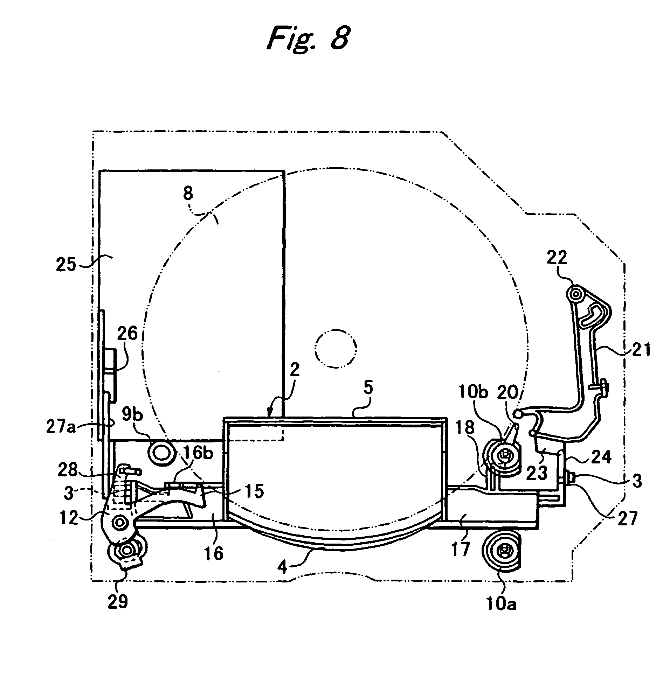

The slider 25 is movably fixed to the housing 1 (see Fig1). The slider 25 has a cam 26 abutting the leg extension 27a of the stopper 2, and it is movable in unison with the advance of the disc 8 in the housing 1 while allowing the leg extension 27a to follow the cam contour 26. Thus, the stopper 2 is tilted so that the rear blocking piece 5 rises up and that the front blocking piece 4 descends down (see Fig.1(C)). Thus, insertion of another disc from the disc slot 1 a is prevented when the disc 8 reaches the final loading position. Fig.8 shows that the disc 8 is fully inserted in the disc apparatus.

Release of the disc 8 from the turntable make: the leg extension 27a of the stopper 2 return toward the disc slot 1 a; the first and second rolls 10a and 10b move inward; the first lever 12 rotate counter clockwise; and the stopper 2 return from Fig.1(B) to Fig.1(A). All these parts are spring-biased to return to their initial positions in response to release and ejection of the disc from the disc apparatus.

As described above, when the disc apparatus is loaded with a disc 8, the rear blocking piece 5 of the stopper 2 blocks the way 7 to the loading position (see Fig.1(C)), thereby preventing another disc if inserted from the disc slot 1a from reaching the turntable. When the disc apparatus is not loaded, the stopper 2 remains in the stand-by position (Fig.1(A)), where the loading of a smaller disc (80 mm in diameter) is not permitted. Specifically when the smaller disc is inserted from the disc slot 1a, it cannot move forward beyond the descending rear blocking piece 5. It is too small in diameter to hit and actuate the first rotary lever 12 and the forward roll 10a simultaneously. Specifically, the clockwise rotation of the first rotary lever 12 and the outward movement of the ganged rolls 10a and 10b cannot be caused simultaneously, and therefore, the stopper 2 remains in the stand-by position, in which the rear blocking piece 5 blocks the way 7 to the loading position. Likewise, insertion of a deformed disc is not permitted.

Any swinging means other than the above described one can be used as for instance follows: the stopper is connected to and driven by an electric motor. The electric motor turns the stopper when associated sensors detect insertion of a disc from the disc slot. Such sensors may be arranged to detect discs in respect of their sizes. They direct signals to the electric motor only when they recognize the disc of regular size and shape. Some sensors may be arranged in the vicinity of the turntable, and the stopper remains in Fig.1(C) as long as the sensors detect the loading of the disc.

## Claims

1. A disc insertion preventive device to be mounted in a housing (1) of a disc apparatus having a disc slot (1a) made on its front side, **characterized by** comprising:
a disk stopper (2) having a flat plate and front and rear blocking pieces (4 and 5) descending from the opposite front and rear edges of the flat plate, the stopper (2) being pivotally fixed to the housing (1) with the front blocking piece (4) directed toward the disc slot (1a) of the housing; and
translating (25) and swinging means (12,21), responsive to the absence of a disc in the housing (1), for inclining the stopper (2) with the rear blocking piece (5) down and with the front blocking piece (4) up, thus preventing advance of a disc smaller than a predetermined size disc beyond the descendent rear blocking piece (5); said translating and swinging means being also responsive to insertion of a regular-size disc for keeping the stopper (2) horizontal, thereby permitting advance of the regular-size disc to the final loading position in the housing (1), and responsive to the presence of a disc in the housing for inclining the stopper (2) with the rear blocking piece (5) up and with the front blocking piece (4) down, thereby preventing insertion of another disc from the disc slot (1a).

2. A disc insertion preventive device according to claim 1, wherein the flat plate of the stopper (2) has first and second lateral narrow extensions (16 and 17) from its opposite sides, and a leg extension (27a) extending downward from lateral side end of the first lateral narrow extension (16), the first lateral narrow extension (16) having a slope (16a) formed on its upper surface;
the swinging means comprising:
a first rotary lever (12) having first and second arms (29 and 15), the first rotary lever (12) being placed next to one end of the disc slot (1a), and being spring-biased toward the stand-by position in which: the first arm (29) is located to be hit and pushed by a disc when inserted in the disc slot (1 a); and the second arm (15) is applied to the slope (16a) of the first lateral narrow extension (16) of the flat plate of the stopper (2) whereby the stopper may balance on the leg extension (27a) in response to insertion of the disc from the disc slot (1a), allowing advance of the disc to the final loading position;
a second rotary lever (21) one end of which being rotatably fixed to the housing (1);
forward and rearward rolls (10a and 10b) both ganged and movably fixed to the housing, and operatively connected to the second rotary lever (21), the rearward roll (10b) having latch means (19) to keep the stopper (2) inclined with the rear blocking piece (5) down and with the front blocking piece (4) up; the forward roll (10a) being placed so close to the other end of the disc slot (1 a) as to be hit and pushed by a disc when inserted in the disc slot, whereby the ganged rolls (10a and 10b) are shifted laterally to allow the rearward roll (10b) to release the stopper (2), and at the same time rotate the second rotary lever (21) until it catch the other engagement projection (18) of the second lateral narrow extension (17) of the flat plate of the stopper, thus keeping the stopper standing on the leg extension (27a); and
a slider (25) movably fixed to the housing, the slider (25) having a cam (26) abutting the leg extension (27a) of the stopper, the slider (25) being movable in unison of the advance of the disc in the housing while allowing the leg extension to follow the cam contour, thus tilting the stopper when the disc reaches the final loading position so that the rear blocking piece (5) rises up and that the front blocking piece (4) descends down, thus preventing insertion of another disc from the disc slot.

3. A disc insertion preventive device according to claim 2, wherein the first rotary lever (12) further having a third arm (28) to abut and hold the first lateral narrow extension (16) of the flat plate of the stopper when the second arm (15) makes the stopper balance on the leg extension (27a), thus preventing further rotation of the second arm.

## Patentansprüche

1. Scheibeneinlegeverhinderungsvorrichtung, die in einem Gehäuse (1) eines Plattengeräts zu montieren ist, an dessen Vorderseite ein Scheibenschlitz (1a) vorgesehen ist, **dadurch gekennzeichnet, daß** die Vorrichtung aufweist:
einen Scheibenanschlag (2) mit einer ebenen Platte und vorderen und hinteren Sperrelementen (4 und 5), die von den gegenüberliegenden vorderen und hinteren Rändern der ebenen Platte herabhängen, wobei der Anschlag (2) schwenkbar an dem Gehäuse (1) angebracht ist und das vordere Sperrelement (4) zum Scheibenschlitz (1a) des Gehäuses hin gerichtet ist; und
Parallelverschiebungs-(25) und Schwenkeinrichtungen (12, 21), die als Reaktion auf die Abwesenheit einer Scheibe im Gehäuse (1) den Anschlag (2) mit dem hinteren Sperrelement (5) nach unten und mit dem vorderen Sperrelement (4) nach oben neigen, wodurch die Zustellung einer Scheibe mit einer kleineren als einer vorgegebenen Größe über das abgesenkte hintere Sperrelement (5) hinaus verhindert wird; wobei die Parallel-verschiebungs- und Schwenkeinrichtungen außerdem als Reaktion auf das Einführen einer Scheibe von regulärer Größe den Anschlag (2) in horizontaler Lage halten, wodurch die Zustellung der Scheibe von regulärer Größe zur endgültigen Ladeposition in dem Gehäuse (1) zugelassen wird, und die als Reaktion auf die Anwesenheit einer Scheibe im Gehäuse den Anschlag (2) mit dem hinteren Sperrelement (5) nach oben und mit dem vorderen Sperrelement (4) nach unten neigen, wodurch das Einführen einer weiteren Scheibe vom Scheibenschlitz (1a) her verhindert wird.

2. Scheibeneinlegeverhinderungsvorrichtung nach Anspruch 1, wobei die ebene Platte des Anschlags (2) von ihren gegenüberliegenden Seiten ausgehende erste und zweite schmale seitliche Erweiterungen (16 und 17) und eine Schenkelverlängerung (27a) aufweist, die sich von dem seitlichen Ende der ersten schmalen seitlichen Erweiterung (16) nach unten erstreckt, wobei auf der Oberseite der ersten schmalen seitlichen Erweiterung (16) eine Abschrägung (16a) ausgebildet ist;
wobei die Schwenkeinrichtung aufweist:
einen ersten Drehhebel (12) mit ersten und zweiten Armen (29 und 15), wobei der erste Drehhebel (12) unmittelbar an einem Ende des Scheibenschlitzes (1a) angeordnet und zur Bereitschaftsstellung hin federgespannt ist, in welcher der erste Arm (29) so angeordnet ist, daß eine Scheibe beim Einführen in den Scheibenschlitz (1a) an den Drehhebel anschlägt und dagegen drückt; und in welcher der zweite Arm (15) an der Abschrägung (16a) der ersten schmalen seitlichen Erweiterung (16) der ebenen Platte des Anschlags (2) anliegt, wodurch der Anschlag sich als Reaktion auf das Einführen der Scheibe vom Scheibenschlitz (1a) her auf die Schenkelverlängerung (27a) einstellen kann und die Zustellung der Scheibe in die endgültige Ladeposition zuläßt;
einen zweiten Drehhebel (21), der mit einem Ende drehbar an dem Gehäuse (1) angebracht ist;
vordere und hintere Rollen (10a und 10b), die beide mechanisch gekoppelt und beweglich an dem Gehäuse angebracht und in Wirkverbindung funktionsfähig mit dem zweiten Drehhebel (21) stehen, wobei die hintere Rolle (10b) eine Verriegelungseinrichtung (19) aufweist, um den Anschlag (2) mit dem hinteren Sperrelement (5) nach unten und mit dem vorderen Sperrelement (4) nach oben geneigt zu halten; wobei die vordere Rolle (10a) so dicht an dem anderen Ende des Scheibenschlitzes (1a) angeordnet ist, daß eine Scheibe beim Einführen in den Scheibenschlitz an die Rolle anschlägt und dagegen drückt, wodurch die mechanisch gekoppelten Rollen (10a und 10b) seitlich verschoben werden, um zu ermöglichen, daß die hintere Rolle (10b) den Anschlag (2) freigibt und gleichzeitig den zweiten Drehhebel (21) dreht, bis er mit dem anderen Eingriffsvorsprung (18) der zweiten schmalen seitlichen Erweiterung (17) der ebenen Platte des Anschlags in Eingriff kommt, so daß der Anschlag auf der Schenkelverlängerung (27a) stehend gehalten wird, und
einen Schieber (25), der beweglich an dem Gehäuse angebracht ist, wobei der Schieber (25) eine Kurve (26) aufweist, die an die Schenkelverlängerung (27a) des Anschlags anstößt,
wobei der Schieber (25) in Übereinstimmung mit dem Vorschub der Scheibe im Gehäuse verschiebbar ist und dabei ermöglicht, daß die Schenkelverlängerung der Kurvenkontur folgt und auf diese Weise den Anschlag neigt, wenn die Scheibe die endgültige Ladeposition erreicht, so daß das hintere Sperrelement (5) nach oben steigt und das vordere Sperrelement (4) nach unten sinkt, wodurch das Einführen einer weiteren Scheibe vom Scheibenschlitz her verhindert wird.

3. Scheibeneinlegeverhinderungsvorrichtung nach Anspruch 2, wobei der erste Drehhebel. (12) ferner einen dritten Arm (28) aufweist, um an die erste schmale seitliche Erweiterung (16) der ebenen Platte des Anschlags anzustoßen und diese festzuhalten, wenn der zweite Arm (15) den Anschlag auf die Schenkelverlängerung (27a) einstellt, so daß eine weitere Drehung des zweiten Arms verhindert wird.

## Revendications

1. Dispositif de prévention d'insertion de disque destiné à être monté dans un boîtier (1) d'un appareil à disques comportant une fente pour disque (1a) sur sa face avant, **caractérisé en ce qu'**il comprend :
une butée de disque (2) ayant une plaque plate et des pièces de blocage avant et arrière (4 et 5) descendant des bords avant et arrière opposés de la plaque plate, la butée (2) étant fixée de manière pivotante au boîtier (1) avec la pièce de blocage avant (4) dirigée vers la fente pour disque (1a) du boîtier ; et
un moyen de translation (25) et de pivotement (12, 21) réagissant à l'absence d'un disque dans le boîtier (1) pour incliner la butée (2) avec la pièce de blocage arrière (5) en bas et avec la pièce de blocage avant (4) en haut, empêchant ainsi l'avance d'un disque plus petit qu'une taille prédéterminée au-delà de la pièce de blocage arrière descendante (5) ; ledit moyen de translation et de pivotement réagissant également à l'insertion d'un disque de taille normale pour maintenir la butée (2) horizontale, permettant ainsi l'avance du disque de taille normale vers la position de chargement finale dans le boîtier (1), et réagissant à la présence d'un disque dans le boîtier pour incliner la butée (2) avec la pièce de blocage arrière (5) en haut et avec la pièce de blocage avant (4) en bas, empêchant ainsi l'insertion d'un autre disque par la fente pour disque (1a).

2. Dispositif de prévention d'insertion de disque selon la revendication 1, dans lequel la plaque plate de la butée (2) comporte une première et une deuxième pièce de rallonge latérale étroite (16 et 17) à partir de ses côtés opposés et une rallonge de patte (27a) s'étendant vers le bas à partir du côté latéral de la première pièce de rallonge latérale étroite (16), la première pièce de rallonge latérale étroite (16) ayant une inclinaison (16a) formée sur sa surface supérieure ;
le moyen de pivotement comprenant :
un premier levier rotatif (12) comportant un premier et un deuxième bras (29 et 15), le premier levier rotatif (12) étant placé à côté d'une extrémité de la fente pour disque (1a) et étant chargé par ressort vers la position d'attente dans laquelle : le premier bras (29) est placé pour être touché et poussé par un disque lorsqu'il est inséré dans la fente pour disque (1a) ; et le deuxième bras (15) est appliqué sur l' inclinaison (16a) de la première pièce de rallonge latérale étroite (16) de la plaque plate de la butée (2), de sorte que la butée peut être en équilibre sur la rallonge de patte (27a) en réaction à l'insertion du disque par la fente pour disque (1a), permettant l'avance du disque vers la position de chargement finale ;
un deuxième levier rotatif (21) dont une extrémité étant fixée en rotation au boîtier (1); des galets avant et arrière (10a et 10b) tous les deux accouplés et fixés de manière mobile au boîtier et connectés fonctionnellement au deuxième levier rotatif (21), le galet arrière (10b) ayant un moyen de verrouillage (19) pour maintenir la butée (2) inclinée avec la pièce de blocage arrière (5) en bas et avec la pièce de blocage avant (4) en haut ; le galet avant (10a) étant placé suffisamment près de l'autre extrémité de la fente pour disque (1a) pour pouvoir être touché et poussé par un disque lorsqu'il est inséré dans la fente pour disque, de sorte que les galets accouplés (10a et 10b) sont déplacés latéralement pour permettre au galet arrière (10b) de relâcher la butée (2) et, en même temps, de faire tourner le deuxième levier rotatif (21) jusqu'à ce qu'il saisisse l'autre bossage de prise (18) de la deuxième pièce de rallonge latérale étroite (17) de la plaque plate de la butée, maintenant ainsi la butée posée sur la rallonge de patte (27a) ; et
un coulisseau (25) fixé de manière mobile au boîtier, le coulisseau (25) comportant une came (26) butant contre la rallonge de patte (27a) de la butée, le coulisseau (25) étant déplaçable conjointement avec l'avance du disque dans le boîtier tout en permettant à la rallonge de patte de suivre le profil de came, faisant ainsi basculer la butée lorsque le disque atteint la position de chargement finale de sorte que la pièce de blocage arrière (5) monte et que la pièce de blocage avant (4) descend, empêchant ainsi l'insertion d'un autre disque par la fente pour disque.

3. Dispositif de prévention d'insertion de disque selon la revendication 2, dans lequel le premier levier rotatif (12) comporte, en outre, un troisième bras (28) pour buter contre et retenir la première pièce de rallonge latérale étroite (16) de la plaque plate de la butée lorsque le deuxième bras (15) met la butée en équilibre sur la rallonge de patte (27a), empêchant ainsi la poursuite de la rotation du deuxième bras.
